(19) Europäisches Patentamt
European Patent Office
Office européen des brevets

(11) **EP 4 148 885 A1**

(12) **EUROPEAN PATENT APPLICATION**
published in accordance with Art. 153(4) EPC

(43) Date of publication:
**15.03.2023 Bulletin 2023/11**

(51) International Patent Classification (IPC):
**H01M 50/249** (2021.01)   **H01M 50/264** (2021.01)
**H01M 50/209** (2021.01)

(21) Application number: **21822841.9**

(52) Cooperative Patent Classification (CPC):
**H01M 50/209; H01M 50/249; H01M 50/264;**
Y02E 60/10

(22) Date of filing: **12.05.2021**

(86) International application number:
**PCT/CN2021/093195**

(87) International publication number:
**WO 2021/249089 (16.12.2021 Gazette 2021/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.06.2020 CN 202021060982 U**

(71) Applicant: **BYD Company Limited
Shenzhen, Guangdong 518118 (CN)**

(72) Inventors:
• **ZHANG, Yue**
  **Shenzhen, Guangdong 518118 (CN)**
• **ZHOU, Yanfei**
  **Shenzhen, Guangdong 518118 (CN)**
• **ZHANG, Zhonglin**
  **Shenzhen, Guangdong 518118 (CN)**
• **GU, Xiaofeng**
  **Shenzhen, Guangdong 518118 (CN)**

(74) Representative: **Hoffmann Eitle
Patent- und Rechtsanwälte PartmbB
Arabellastraße 30
81925 München (DE)**

(54) **BATTERY PACK AND VEHICLE**

(57)    A battery pack (S) is provided, which includes: a box body (10), the box body being formed with a mounting space (11); cell arrays (40), the cell array (40) being arranged in the mounting space (11), and including multiple battery cores (41) arranged in a preset direction; an adjustment shim set (30), the adjustment shim set (30) including at least one adjustment shim (31), being arranged in the mounting space (11), and being arranged on one side of the cell array (40) in the preset direction; and a first wedge-shaped member (11), the first wedge-shaped member (11) being arranged in the mounting space (11), and being arranged on the other side of the cell array (40) in the preset direction or on one side of the adjustment shim (31) away from the cell array (40) so as to extrude the cell array (40) and the adjustment shim set (30).

FIG. 2

**Description**

## CROSS-REFERENCE TO RELATED APPLICATIONS

The present disclosure claims the priority of the Chinese Patent Application No. "202021060982.0", titled "BATTERY PACK AND VEHICLE", and filed by BYD Company Limited on June 9, 2020.

## FIELD

The present disclosure relates to the technical field of batteries, and specifically to a battery pack and a vehicle.

## BACKGROUND

In the related art, a battery pack is usually designed in a fixed size, that is, after multiple battery cores are arranged in sequence to form cell arrays, an overall thickness of the arranged cell arrays is a fixed value by applying different degrees of initial pretightening forces. However, there is a certain difference in a thickness of each battery core due to deviation during manufacturing, which leads to a difference in an overall thickness of the cell array including the same number of battery cores, and thus, in order that the thickness of different cell arrays (each cell array includes the same number of battery cores) reaches a fixed value, it is inevitable to apply different initial pretightening forces to the cell arrays, thereby resulting in a difference in cycle performance of the battery cores, and further influencing the cycle service life of the battery cores.

## SUMMARY

In a first aspect, the present disclosure discloses a battery pack, which includes: a box body, the box body being formed with a mounting space; cell arrays, the cell array being arranged in the mounting space, and including multiple battery cores arranged in a preset direction, and the preset direction being parallel to a thickness of the battery core; an adjustment shim set, the adjustment shim set including at least one adjustment shim, and the adjustment shim set being arranged in the mounting space, and arranged on one side of the cell array in the preset direction; and a first wedge-shaped member, the first wedge-shaped member being arranged in the mounting space, and the first wedge-shaped member being arranged on the other side of the cell array in the preset direction or on one side of the adjustment shim away from the cell array so as to extrude the cell array and the adjustment shim set. The number of the adjustment shims is configured such that an extrusion force on the cell array in the mounting space is a predetermined pretightening force.

According to the battery pack of an embodiment of the present disclosure, the number of adjustment shims is configured such that an extrusion force on the cell array in the mounting space is a predetermined pretightening force. That is, the battery pack can adjust the extrusion force on the cell array in the mounting space by adjusting the number of the adjustment shims, and then the extrusion force can be adjusted to the predetermined pretightening force. Moreover, according to the performance requirements of the battery core, an optimal extrusion force, i.e., the predetermined pretightening force, which can make the battery core have a better cycle time and charge-discharge performance in a life cycle when the cell array is in an extruded state can be determined by experiments in advance. Therefore, for the cell arrays with different thicknesses (each cell array has the same number of battery cores), by controlling the number of the adjustment shims, the extrusion force applied on each cell array can be the predetermined pretightening force, so that the cycle time and charge-discharge performance of the battery core in each cell array can be improved, a mode of the box body can also be promoted, and the anti-vibration reliability of the box body can be improved.

According to some embodiments of the present disclosure, a thickness of the first wedge-shaped member gradually decreases from a top portion of the box body to a bottom portion of the box body.

According to some embodiments of the present disclosure, an inner wall of the box body includes a first inclined surface and a first vertical surface opposite in the preset direction. The first wedge-shaped is provided with a fitting inclined surface and a fitting vertical surface. The fitting inclined surface is attached to the first inclined surface. The adjustment shim set is attached to the first vertical surface or the fitting vertical surface.

According to some embodiments of the present disclosure, the battery pack further includes a second wedge-shaped member arranged in the mounting space. The second wedge-shaped member is arranged between the first wedge-shaped member and the box body. The second wedge-shaped member is provided with the first inclined surface. In inner wall of the box body includes the first vertical surface opposite to the first inclined surface in the preset direction. The first vertical surface is arranged on one side of the cell array away from the second wedge-shaped member. The first wedge-shaped member is provided with the fitting inclined surface and the fitting vertical surface. The fitting inclined surface is attached to the first inclined surface. The adjustment shim set is attached to the first vertical surface or the fitting vertical surface.

According to some embodiments of the present disclosure, the number of the adjustment shims is configured such that the sum of a thickness of the adjustment shim set and a thickness of an extruded cell array is a predetermined thickness. The first wedge-shaped member is configured such that the distance between the fitting vertical surface and the first vertical surface is the predetermined thickness, so that the extrusion force on the cell array in the mounting space is the predetermined pretightening force.

According to some embodiments of the present disclosure, an initial thickness of the cell array before being assembled into the mounting space and the number of the adjustment shims meet the following relationship:

$$T_{cells'} = T_{pack} - T_{wedge} + \frac{F - K_{shim} \cdot \Delta T_{shims}}{K_{cell}} - n \cdot T_{shim}$$

where $T_{cells'}$ is the initial thickness of the cell array before being mounted into the mounting space;

$n$ is the number of the adjustment shims, and $n \geq 1$;

$T_{pack}$ is a minimum distance between the first inclined surface and the first vertical surface in the preset direction;

$T_{shim}$ is a minimum thickness of the first wedge-shaped member in the preset direction;

$T_{shim}$ is a thickness of the adjustment shim;

$K_{cell}$ is an equivalent stiffness coefficient of the cell array;

$K_{shim}$ is a stiffness coefficient of the adjustment shim;

$\triangle T_{shims}$ is a compression amount of the adjustment shim; and

$F$ is the predetermined pretightening force.

According to some embodiments of the present disclosure, the battery pack further includes a fixing member. The fixing member is connected with the box body so as to fix the first wedge-shaped member in the mounting space.

According to some embodiments of the present disclosure, the fixing member is a bolt. The box body is provided with a screw hole. The first wedge-shaped member is provided with a fixing hole. The bolt passes through the fixing hole so as to fit with the screw hole. One side of the fixing hole away from the cell array is provided with an avoidance hole so as to avoid the bolt.

According to some embodiments of the present disclosure, the battery pack includes multiple fixing members. The multiple fixing members are distributed at intervals in a length direction of the first wedge-shaped member. The length direction of the first wedge-shaped member is parallel to that of the battery core.

According to some embodiments of the present disclosure, the first wedge-shaped member is provided with weight reduction grooves or weight reduction holes.

According to some embodiments of the present disclosure, a height of the first wedge-shaped member is less than or equal to that of the cell array.

According to some embodiments of the present disclosure, the battery pack further includes a tensioning member. The box body includes a bottom plate and side plates surrounding a periphery of the bottom plate. The bottom plate and the side plates together define the mounting space. The side plates include a first side plate and a second side plate opposite arranged in the preset direction. The tensioning member is arranged on the top portion of the box body and connects the first side plate with the second side plate.

In a second aspect, the present disclosure includes the above-mentioned battery pack.

Additional aspects and advantages of the present disclosure will be given in the following description, some of which will become apparent from the following description or may be learned from practices of the present disclosure.

## BRIEF DESCRIPTION OF THE DRAWINGS

The foregoing and/or additional aspects and advantages of the present disclosure will become apparent and comprehensible in the description of the embodiments made with reference to the following accompanying drawings.

FIG. 1 is a schematic structural diagram of a battery pack;
FIG. 2 is an exploded view of a battery pack;
FIG. 3 is a structural diagram of a battery pack;
FIG. 4 is a schematic structural diagram of a first wedge-shaped member; and
FIG. 5 is a schematic diagram of a relationship between a battery pack and a vehicle.

Reference numerals of the accompanying drawing:

Battery pack S; vehicle Q;

box body 10; mounting space 11; first inclined surface 12; first vertical surface 13; rib 14; side plate 15; first side plate 151; second side plate 152; bottom plate 16;

first wedge-shaped member 21; fitting inclined surface 211; fitting vertical surface 212; avoidance hole; 213; weight reduction groove 214; fixing member 22;

adjustment shim set 30; adjustment shim 31; cell array 40; battery core 41; and tensioning member 50.

## DETAILED DESCRIPTION

The embodiments of the present disclosure are described in detail below, and the embodiments described with reference to accompanying drawings are exemplary.

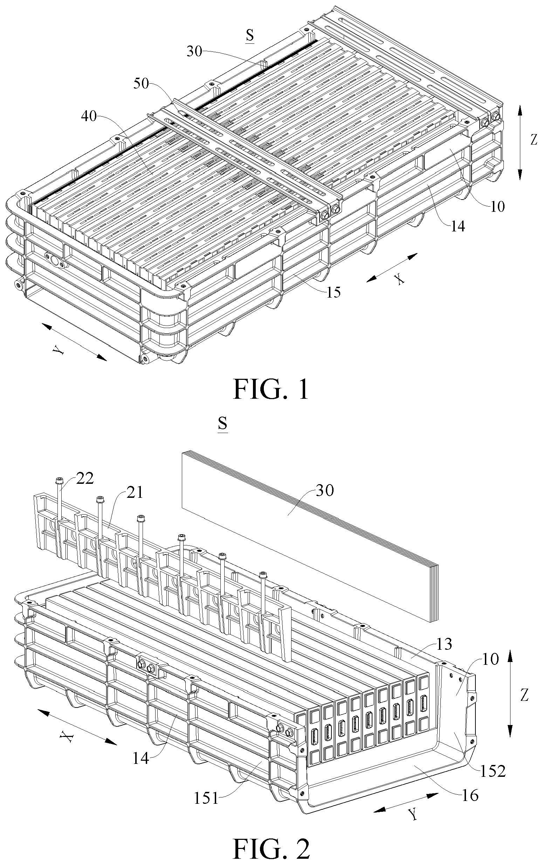

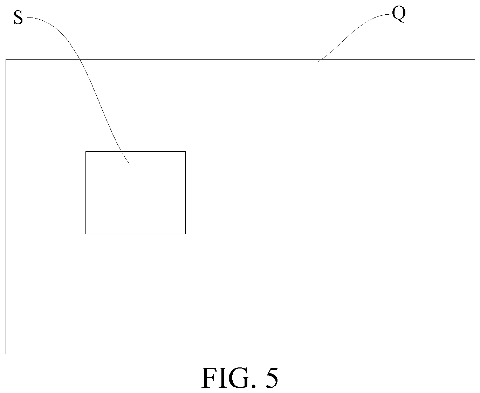

The following describes a battery pack S according to an embodiment of the present disclosure with reference to FIGS. 1 to 5. The present disclosure further discloses a vehicle having the above-mentioned battery pack S, the battery pack S being used as a power battery.

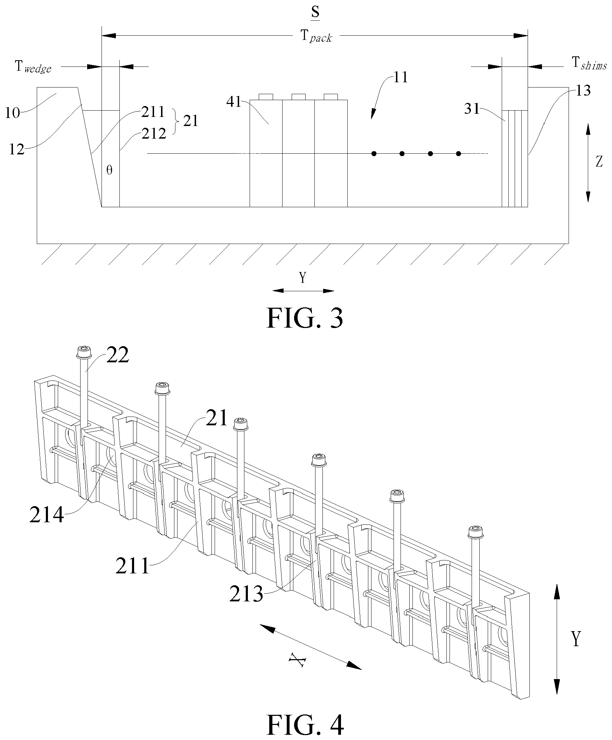

In combination with those as shown in FIG. 1 and FIG. 4, the battery pack S includes: a box body 10, cell arrays 40, a first wedge-shaped member 21 and an adjustment shim set 30. The box body 10 is formed with a mounting space 11. The cell array 40 is arranged in the mounting space 11. The box body 10 can play a role of supporting and protecting the cell arrays 40. Moreover, the cell array 40 includes multiple battery cores 41 arranged in a preset direction, the preset direction being parallel to a thickness direction of the battery core 41. The battery core 41 is a square battery core. The battery core 41 is defined with a length, a width and a thickness. The length of the battery core 41 is greater than the width of the battery core 41, and the width of the battery core 41 is greater than the thickness of the battery core 41. Moreover, as shown in FIG. 1, a length direction of the battery core 41 is an X direction, a thickness direction of the battery core 41 is a Y direction, and a width direction of the battery core 41 is a Z direction.

In an embodiment, the length direction of the battery core 41 is parallel to a length direction of the battery pack S, and the thickness direction of the battery core 41 is parallel to a width direction of the battery pack S. Of course, in another embodiment, the length direction of the battery core 41 may also be parallel to the width direction of the battery pack S, and the thickness direction of the battery core 41 may also be parallel to the length direction of the battery pack S.

As shown in FIG. 2 and FIG. 3, the adjustment shim set 30 includes at least one adjustment shim 31, and the adjustment shim set 30 is arranged in the mounting space 11 and is arranged on one side of the cell array 40 in the preset direction (i.e., the Y direction). The first wedge-shaped member 21 is arranged in the mounting space 11, and the first wedge-shaped member 21 is arranged on the other side of the cell array 40 in the preset direction or on one side of the adjustment shim set 30 away from the cell array 40 so as to extrude the cell array 40 and the adjustment shim set 30.

That is, in the Y direction, one side of the first wedge-shaped member 21 abuts against the box body 10, and the other side of the first wedge-shaped member 21 abuts against the adjustment shim set 30 so as to extrude the cell arrays 40 and the adjustment shim set 30. Alternatively, one side of the first wedge-shaped member 21 abuts against the box body 10, and the other side of the first wedge-shaped member 21 abuts against the cell array 40 so as to extrude the cell array 40 and the adjustment shim set 30.

The number of the adjustment shims 31 is configured such that an extrusion force on the cell array 40 in the mounting space 11 is a predetermined pretightening force. That is, the battery pack S can adjust the extrusion force on the cell array 40 in the mounting space 11 by adjusting the number of the adjustment shims 31, and then the extrusion force can be adjusted to the predetermined pretightening force.

According to the performance requirements of the battery core 41, an optimal extrusion force, i.e., the predetermined pretightening force, which can make the battery core 41 have a better cycle time and charge-discharge performance in a life cycle when the cell array 40 is in an extruded state can be determined by experiments in advance. Therefore, for the cell arrays 40 with different thicknesses (each cell array 40 has the same number of battery cores 41), by controlling the number of the adjustment shims 31, the extrusion force applied on each cell array 40 can be the predetermined pretightening force, so that the cycle time and charge-discharge performance of the battery core 41 in each cell array 40 can be improved, a mode of the box body 10 can also be promoted, and the anti-vibration reliability of the box body 10 can be improved.

As shown in FIG. 4, a thickness of the first wedge-shaped member 21 gradually decreases from a top portion of the box body 10 to a bottom portion of the box body 10. Since a thickness size of the first wedge-shaped member 21 gradually decreases from the top portion of the box body 10 to the bottom portion of the box body 10, when the first wedge-shaped member 21 fits with the box body 10, the first wedge-shaped member 21 can provide a force for the cell array 40 in the Y direction. The extrusion force on the cell array 40 in the mounting space 11 is controlled by adjusting a position of the first wedge-shaped member 21 relative to the box body 10 and adjusting the number of the adjustment shims 31.

It should be noted that the thickness of the first wedge-shaped member 21 gradually decreases from the top portion of the box body 10 to the bottom portion of the box body 10. It can be seen from FIG. 4 that the thickness of one end of the first wedge-shaped member 21 is greater than the other end thereof in the Y direction of the first wedge-shaped member 21. It can be understood that one end with a larger thickness is the top portion of the box body 10, and one end with a smaller thickness is the bottom portion of the box body 10 in the Y direction of the first wedge-shaped member 21.

According to an embodiment of the present disclosure, in combination with those as shown in FIG. 2 and FIG. 3, an inner wall of the box body 10 includes a first inclined surface 12 and a first vertical surface 13 opposite in the preset direction. The first wedge-shaped member 21 is provided with a fitting inclined surface 211 and a fitting vertical surface 212. The fitting inclined surface 211 is attached to the first inclined surface 12. The adjustment shim set 30 is attached to the first vertical surface 13 or the fitting vertical surface 212. That is, the adjustment shim set 30 can be arranged between the fitting vertical surface 212 of the first wedge-shaped member 21 and the cell array 40, or can be arranged between the cell array 40 and the first vertical surface 13 of the box body 10. The inner wall of the box body 10 is two inner surfaces of the box body 10 opposite in the Y direction. Moreover, a normal direction of the first vertical surface 13 is parallel to the Y direction.

According to another embodiment of the present disclosure, the battery pack S further includes a second wedge-shaped member (not shown in the figures) arranged in the mounting space 11. The second wedge-shaped member is arranged between the first wedge-shaped member 21 and the box body 10. The second wedge-shaped member is provided with the first inclined surface, the inner wall of the box body 10 includes the first vertical surface 13 opposite to the first inclined surface in the preset direction. The first vertical surface 13 is arranged on one side of the cell array 40 away from the second wedge-shaped member. The first wedge-shaped member 21 is provided with the fitting inclined surface 211 and the fitting vertical surface 212. The fitting inclined surface 211 is attached to the first inclined surface. The adjustment shim set 30 is attached to the first vertical surface 13 or the fitting vertical surface 212.

Thus, when the first wedge-shaped member 21 moves downwards in the box body 10, an extrusion force in the Y direction can be provided for the cell array 40. The extrusion force on the cell array 40 in the mounting space 11 is controlled through fitting of the first wedge-shaped member 21 and the adjustment shim set 30.

In an embodiment, the number of the adjustment shims 31 is configured such that the sum of sizes of the adjustment shim set 30 and the extruded cell array 40 in the Y direction is a predetermined thickness. The first wedge-shaped member 21 is configured such that the distance between the fitting vertical surface 212 and the first vertical surface 13 is a predetermined thickness, so that the extrusion force on the cell array 40 in the mounting space 11 is the predetermined pretightening force.

Before assembly, a set of standard cell arrays 40 (i.e., the thickness of each battery core 41 in the cell array 40 is a standard value) can be first extruded by tooling. When the extrusion force on the standard cell array 40 is the predetermined pretightening force, a size of the cell array 40 in the Y direction is the predetermined thickness, and the extrusion force on the cell array 40 can be obtained by detecting pressure at the tooling. Similarly, before assembly, a set of cell arrays 40 to be mounted (the cell array 40 is different from the above-mentioned standard cell array 40 in thickness, but has the same number of battery cores 41, and the difference in thickness is due to an error during manufacturing of each battery core 41) is extruded. When the extrusion force on the cell array 40 is the predetermined pretightening force, thickness thereof is measured. When the measured thickness is less than the predetermined thickness, the number of the adjustment shims 31 (i.e., the adjustment shim set 30) can be determined according to a difference value between the predetermined thickness and the measured thickness, so that the sum of the sizes of the adjustment shim set 30 and the extruded cell array 40 in the Y direction is the predetermined thickness. During assembly, the cell array 40 to be mounted and a predetermined number of the adjustment shims 31 (i.e., the adjustment shim set 30) can be first mounted into the mounting space 11, and the first wedge-shaped member 21 is then inserted into the mounting space 11. Since the distance between the fitting vertical surface 212 of the first wedge-shaped member 21 and the first vertical surface 13 of the box body 10 in the preset direction (i.e., the Y direction) is the predetermined thickness, the first wedge-shaped member 21 can extrude the cell arrays 40 after being inserted into the mounting space 11, so that the sum of the sizes of the adjustment shim set 30 and the extruded cell arrays 40 in the Y direction is the predetermined thickness. At this time, the extrusion force on the cell array 40 is the predetermined pretightening force.

In another embodiment, during assembly, the first wedge-shaped member 21 can be first inserted into the mounting space 11, and the adjustment shim 31 is then inserted, and the extrusion force on the cell array 40 in the mounting space 11 can be monitored in real time when the adjustment shim 31 is inserted. When it is measured that the extrusion force on the cell array 40 reaches the predetermined pretightening force, as long as the number of adjustment shims 31 is adjusted at this time, the extrusion force on the cell array 40 in the mounting space 11 can be the predetermined pretightening force.

According to an embodiment of the present disclosure, the initial thickness of the cell array 40 before being extruded is $T_{cells'}$, the number of the adjustment shims 31 is n, and n ≥ 1, and $T_{cells'}$ and n meet the following relationship:

$$T_{cells'} = T_{pack} - T_{wedge} + \frac{F - K_{shim} \cdot \Delta T_{shims}}{K_{cell}} - n \cdot T_{shim}$$

Where:

$T_{pack}$ is a minimum distance (mm) between the first inclined surface and the first vertical surface in the preset direction;
$T_{wedge}$ is a minimum thickness (mm) of the first wedge-shaped member 21 in the preset direction;
$T_{shim}$ is a thickness (mm) of the adjustment shim 31;
$K_{cell}$ is an equivalent stiffness coefficient of the cell array 40 (value thereof > 0);
$K_{shim}$ is a stiffness coefficient of the adjustment shim 31 (value thereof > 0);
$\triangle T_{shims}$ is a compression amount of the adjustment shim 31; and
$F$ is a pretightening force design value (N).

A wedge angle θ of the first wedge-shaped member 21 is configured to guarantee assembly operations, and does not involve in an adjustment of the magnitude of the pretightening force F.

In an embodiment, a method for determining the number of the adjustment shims 31 of the adjustment shim set 30 is as follows: before assembly, a set of standard cell arrays 40 can be first extruded by tooling. When the extrusion force on the standard cell array 40 is the predetermined pretightening force, a thickness of the cell array 40 is the predetermined thickness, and the extrusion force on the cell array 40 can be obtained by detecting pressure at the tooling. Similarly, before assembly, a set of cell arrays 40 to be mounted (the cell array 40 is different from the above-mentioned standard cell array 40 in thickness, but has the same number of battery cores 41, and the difference in thickness is due to an error during manufacturing of each battery core 41) is extruded. When the extrusion force on the cell array 40 is the predetermined pretightening force, thickness thereof is measured. When the measured thickness is less than the predetermined thickness, the number of the adjustment shims 31 (i.e., the adjustment shim set 30) can be determined according to a difference value between the predetermined thickness and the measured thickness. It should be noted that the amount of deformation of the adjustment shim 31 is very small. Therefore, $\triangle T_{shims}$ can be ignored. The adjustment shim 31 can be selected from a metal sheet, such as a steel sheet.

As shown in FIG. 4, the battery pack S further includes fixing member 22. The fixing member 22 is connected with the box body 10 so as to fix the first wedge-shaped member 21 in the mounting space 11. The first wedge-shaped member 21 can be fixed in the mounting space 11 by the fixing member 22, so that it can be guaranteed that the first wedge-shaped member 21 will not change a position relative to the box body 10. Thus, the cell array 40 can be subjected to a constant pretightening force.

In an optional embodiment, the fixing member 22 is a bolt. The box body 10 is provided with a screw hole. The first wedge-shaped member 21 is provided with a fixing hole. The bolt passes through the fixing hole so as to fit with the screw hole. One side of the fixing hole away from the cell array 40 is provided with an avoidance hole 213 so as to avoid the bolt. The box body 10 and the first wedge-shaped member 21 are connected with the bolts, so that connection strength between the box body 10 and the first wedge-shaped member 21 can be promoted, which guarantees that the first wedge-shaped member 21 will not be separated from the box body 10 when the battery pack S is in use. Moreover, in a process of tightening the bolts, the first wedge-shaped member 21 will move towards the bottom portion of the box body 10 relative to the box body 10, and moves towards near the cell array 40 at the same time. However, in this process, the bolts only move near the bottom portion of the box body 10 relative to the box body 10, and do not move towards near the cell array 40, so that the first wedge-shaped member 21 also moves towards near the cell array 40 relative to the bolt in the assembly process. Therefore, one side of the fixing hole away from the cell array 40 is provided with an avoidance hole 213, which can avoid that the first wedge-shaped member 21 interferes with the bolts in the process of moving towards near the cell array 40. Of course, in other embodiments, the fixing hole in the first wedge-shaped member 21 can also be designed as an elongated hole, so that the bolt can be avoided by controlling the length design of the hole, without providing the avoidance hole 213.

The box body 10 includes a bottom plate 16 and side plates 15 surrounding the bottom plate 16. The bottom plate 16 and the side plates 15 together define the mounting space 11. The screw hole may be provided in the bottom plate 16, or the bottom plate 16 of the box body 10 is provided with a mounting plate or a mounting block, and the screw holes is provided in the mounting plate or the mounting block. In this regard, the present disclosure does not make any specific limitation.

Moreover, as shown in FIG. 4, the battery pack S includes multiple fixing members 22. The multiple fixing members 22 are distributed at intervals in the length direction of the first wedge-shaped member 21 (i.e., the X direction). The length direction of the first wedge-shaped member 21 is parallel to the length direction of the battery core 41. By arranging the multiple fixing members 22, the connection stability between the first wedge-shaped member 21 and the box body can be promoted, which avoids that a portion of the first wedge-shaped member 21 moves in the Z direction.

In another optional embodiment, the fixing member 22 is a pressing plate. The pressing plate is connected with the box body 10 and is pressed on a top portion of the first wedge-shaped member 21. In this way, the pressing plate is directly pressed on the top portion of the first wedge-shaped member 21, which not only can guarantee the connection strength between the first wedge-shaped member 21 and the box body 10, but also facilitates connection between the first wedge-shaped member 21 and the box body 10.

In yet another optional embodiment, the fixing member 22 is a buckle. The buckle is arranged on the first wedge-shaped member 21. The buckle is clipped on the box body 10. By arranging the buckle on the first wedge-shaped member 21 and fixing the first wedge-shaped member 21 onto the box body 10 by means of clipping, detachment and connection between the first wedge-shaped member 21 and the box body 10 can be facilitated, so that production and maintenance of the battery pack S can be further facilitated.

As shown in FIG. 4, weight reduction grooves 214 or weight reduction holes are distributed in the first wedge-shaped member 21. By distributing the weight reduction grooves 214 or weight reduction holes in the first wedge-shaped member 21, the weight of the first wedge-shaped member 21 can be reduced, so that a lightweight design of the battery pack S can be achieved.

According to an embodiment of the present disclosure, a height of the first wedge-shaped member 21 (i.e., the size of the first wedge-shaped member 21 in the Z direction) is less than or equal to that of the cell array 40 (i.e., the size of the cell array 40 in the Z direction). When a bottom portion of the first wedge-shaped member 21 is in contact with the bottom portion of the box body 10, the size of the first wedge-shaped member 21 in the Z direction can be equal to that of the cell array 40 in the Z direction. At this time, it can be guaranteed that the cell array 40 may be subjected to a uniform pretightening force in the Z direction. When the first wedge-shaped member 21 is not in contact with the bottom portion of the box body 10, it is necessary to guarantee that the first wedge-shaped member 21 will not extend beyond the cell array 40 in the Z direction. Therefore, the size of the first wedge-shaped member 21 in the Z direction is smaller than that of the cell array 40 in the Z direction.

As shown in FIG. 1 and FIG. 2, the battery pack S further includes a tensioning member 50. The box body 10 includes: a bottom plate 16 and side plates 15 surrounding a periphery of the bottom plate 16. The bottom plate 16 and the side plates 15 together define the mounting space 11. The side plates 15 include a first side plate 151 and a second side plate 152 opposite arranged in the preset direction. The tensioning member 50 is arranged on the top portion of the box body 10 and connects the first side plate 151 with the second side plate 152. When the first wedge-shaped member 21 and the adjustment shim set 30 cooperate to pretighten the cell array 40, the first wedge-shaped member 21 will apply pressure to the first side plate 151 and the second side plate 152. The first side plate 151 and the second side plate 152 can be fixedly connected together by the tensioning member 50, so that the bearing capacity of the box body 10 can be improved, which avoids that the box body 10 is damaged by force.

As shown in FIG. 1 and FIG. 2, multiple ribs 14 are arranged on an outer side of the box body 10. By arranging the multiple ribs 14 on the outer side of the box body 10, the structural strength of the box body 10 can be improved.

Also, according to the vehicle Q of an embodiment of the second aspect of the present disclosure, the vehicle Q includes the above-mentioned battery pack S, and the battery pack S is used as a power battery on the vehicle Q.

In the description of the present disclosure, it should be understood that, orientations or position relationships indicated by terms such as "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", and "circumferential" are orientations or position relationship shown based on the accompanying drawings, and are merely used for describing the present disclosure and simplifying the description, rather than indicating or implying that the apparatus or element should have a particular orientation or be constructed and operated in a particular orientation, and therefore, should not be construed as a limitation on the present disclosure.

In the descriptions of this specification, descriptions using reference terms "an embodiment", "some embodiments", "an exemplary embodiment", "an example", "a specific example", or "some examples" mean that specific characteristics, structures, materials, or features described with reference to the embodiment or example are included in at least an embodiment or example of the present disclosure. In this specification, schematic descriptions of the foregoing terms do not necessarily refer to the same embodiment or example.

Although the embodiments of the present disclosure have been shown and described, a person of ordinary skill in the art should understand that various changes, modifications, replacements and variations may be made to the embodiments without departing from the principles and spirit of the present disclosure, and the scope of the present disclosure is as defined by the appended claims and their equivalents.

## Claims

1. A battery pack, comprising:

a box body, the box body being formed with a mounting space;

cell arrays, the cell arrays being arranged in the mounting space, the cell array comprising a plurality of battery cores arranged in a preset direction, and the preset direction being parallel to a thickness direction of the battery cores;

an adjustment shim set, the adjustment shim set comprising at least one adjustment shim, and the adjustment shim set being arranged in the mounting space, and arranged on one side of the cell array in the preset direction; and

a first wedge-shaped member, the first wedge-shaped member being arranged in the mounting space, and the first wedge-shaped member being arranged on the other side of the cell array in the preset direction or one side of the adjustment shim away from the cell array so as to extrude the cell array and the adjustment shim set, wherein the number of the adjustment shims is configured such that an extrusion force on the cell array in the mounting space is a predetermined pretightening force.

2. The battery pack according to claim 1, wherein a thickness of the first wedge-shaped member gradually decreases from a top portion of the box body to a bottom portion of the box body.

3. The battery pack according to claim 1 or 2, wherein an inner wall of the box body comprises a first inclined surface and a first vertical surface opposite in the preset direction, the first wedge-shaped member is provided with a fitting inclined surface and a fitting vertical surface, the fitting inclined surface is attached to the first inclined surface, and the adjustment shim set is attached to the first vertical surface or the fitting vertical surface.

4. The battery pack according to any one of claims 1 to 3, further comprising a second wedge-shaped member arranged in the mounting space, wherein the second wedge-shaped member is arranged between the first wedge-shaped member and the box body, the second wedge-shaped member is provided with a first inclined surface, the inner wall of the box body comprises the first vertical surface opposite to the first inclined surface in the preset direction, the first vertical surface is arranged on one side of the cell array away from the second wedge-shaped member, the first wedge-shaped member is provided with a fitting inclined surface and a fitting vertical surface, the fitting inclined surface is attached to the first inclined surface, and the adjustment shim set is attached to the first vertical surface or the fitting vertical surface.

5. The battery pack according to claim 3 or 4, wherein the number of the adjustment shims is configured such that the sum of a thickness of the adjustment shim set and a thickness of the extruded cell array is a predetermined thickness, and the first wedge-shaped member is configured such that the distance between the fitting vertical surface and the first vertical surface is the predetermined thickness, so that the extrusion force on the cell array in the mounting space is the predetermined pretightening force.

6. The battery pack according to claim 3 or 4, wherein an initial thickness of the cell array before being extruded is $T_{cells'}$, the number of the adjustment shims is n, and $n \geq 1$, and $T_{cells'}$ and n meet the following relationship:

$$T_{cells'} = T_{pack} - T_{wedge} + \frac{F - K_{shim} \cdot \Delta T_{shims}}{K_{cell}} - n \cdot T_{shim}$$

wherein,

$T_{pack}$ is a minimum distance between the first inclined surface and the first vertical surface in the preset direction;

$T_{wedge}$ is a minimum thickness of the first wedge-shaped member in the preset direction;

$T_{shim}$ is a thickness of the adjustment shim;

$K_{cell}$ is an equivalent stiffness coefficient of the cell array;

$K_{shim}$ is a stiffness coefficient of the adjustment shim;

$\triangle T_{shims}$ is a compression amount of the adjustment shim; and

$F$ is the predetermined pretightening force.

7. The battery pack according to any one of claims 1 to 6, further comprising a fixing member, the fixing member being connected with the box body so as to fix the first wedge-shaped member in the mounting space.

8. The battery pack according to claim 7, wherein the fixing member is a bolt, the box body is provided with a screw hole, the first wedge-shaped member is provided with a fixing hole, the bolt passes through the fixing hole so as to fit with the screw hole, and one side of the fixing hole away from the cell array is provided with an avoidance hole so as to avoid the bolt.

9. The battery pack according to claim 7 or 8, comprising a plurality of the fixing members, wherein the plurality of the fixing members are distributed at intervals in a length direction of the first wedge-shaped member, and the length direction of the first wedge-shaped member is parallel to that of the battery core.

10. The battery pack according to any one of claims 1 to 9, wherein the first wedge-shaped member is provided with weight reduction grooves or weight reduction holes.

11. The battery pack according to any one of claims 1 to 10, wherein a height of the first wedge-shaped member is less than or equal to that of the cell array.

12. The battery pack according to any one of claims 1 to 11, further comprising a tensioning member, wherein the box body comprises a bottom plate and side plates surrounding a periphery of the bottom plate, and the bottom plate and the side plates together define the mounting space; and the side plates comprise a first side plate and a second side plate opposite arranged in the preset direction, and the tensioning member is arranged on the top portion of the box body and connects the first side plate and the second side plate.

13. A vehicle, comprising the battery pack according to any one of claims 1 to 12.

FIG. 1

FIG. 2

FIG. 3

FIG. 4

S          Q

FIG. 5

## INTERNATIONAL SEARCH REPORT

| International application No. |
|---|
| **PCT/CN2021/093195** |

**A.    CLASSIFICATION OF SUBJECT MATTER**

H01M 50/249(2021.01)i;   H01M 50/264(2021.01)i;   H01M 50/209(2021.01)i

According to International Patent Classification (IPC) or to both national classification and IPC

**B.    FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT; WPI; EPODOC; CNKI: 电池, 包, 组, 箱体, 壳, 电芯, 单体, 楔形, 预紧, battery, package, group, box, shell, core, monomer, single, wedge, shape, pre+, tightening

**C.    DOCUMENTS CONSIDERED TO BE RELEVANT**

| Category* | Citation of document, with indication, where appropriate, of the relevant passages | Relevant to claim No. |
|---|---|---|
| X | CN 206148499 U (ANHUI TIANXIN ENERGY TECH CO., LTD.) 03 May 2017 (2017-05-03) <br> description, paragraphs 28-38, figures 1-7 | 1-3, 5, 7-13 |
| X | CN 106450089 A (ANHUI TIANXIN ENERGY TECHNOLOGY CO., LTD.) 22 February 2017 (2017-02-22) <br> description, paragraphs 28-38, figures 1-7 | 1-3, 5, 7-13 |
| X | CN 207097882 U (ANHUI TIANXIN ENERGY TECH CO., LTD.) 13 March 2018 (2018-03-13) <br> description, paragraphs 19-25, figures 1-3 | 1-3, 5, 7-13 |
| PX | CN 212392341 U (BYD COMPANY LTD.) 22 January 2021 (2021-01-22) <br> description, paragraphs 41-76, figures 1-4 | 1-13 |
| A | CN 207217632 U (CONTEMPORARY AMPEREX TECHNOLOGY LTD.) 10 April 2018 (2018-04-10) <br> entire document | 1-13 |
| A | CN 207338498 U (CONTEMPORARY AMPEREX TECHNOLOGY LTD.) 08 May 2018 (2018-05-08) <br> entire document | 1-13 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 July 2021** | **27 July 2021** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2021/093195** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2020161725 A1 (MAHLE INTERNATIONAL GMBH) 21 May 2020 (2020-05-21) entire document | 1-13 |

Form PCT/ISA/210 (second sheet) (January 2015)

INTERNATIONAL SEARCH REPORT
Information on patent family members

International application No.

**PCT/CN2021/093195**

| Patent document cited in search report | | | Publication date (day/month/year) | Patent family member(s) | | | Publication date (day/month/year) |
|---|---|---|---|---|---|---|---|
| CN | 206148499 | U | 03 May 2017 | None | | | |
| CN | 106450089 | A | 22 February 2017 | None | | | |
| CN | 207097882 | U | 13 March 2018 | None | | | |
| CN | 212392341 | U | 22 January 2021 | None | | | |
| CN | 207217632 | U | 10 April 2018 | None | | | |
| CN | 207338498 | U | 08 May 2018 | None | | | |
| US | 2020161725 | A1 | 21 May 2020 | WO | 2018215358 | A1 | 29 November 2018 |
| | | | | DE | 102017208754 | A1 | 29 November 2018 |
| | | | | CN | 110754005 | A | 04 February 2020 |

Form PCT/ISA/210 (patent family annex) (January 2015)

**EP 4 148 885 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202021060982

**16**